(19) Europäisches Patentamt
European Patent Office
Office européen des brevets

(11) **EP 4 286 891 B1**

(12) **EUROPEAN PATENT SPECIFICATION**

(45) Date of publication and mention
of the grant of the patent:
**27.08.2025 Bulletin 2025/35**

(21) Application number: **22216000.4**

(22) Date of filing: **22.12.2022**

(51) International Patent Classification (IPC):
**G01S 13/42** (2006.01)        **G01S 13/931** (2020.01)

(52) Cooperative Patent Classification (CPC):
**G01S 13/42; G01S 13/931**

(54) **METHOD AND APPARATUS FOR VEHICLE SPEED CORRECTION**

VERFAHREN UND VORRICHTUNG ZUR FAHRZEUGGESCHWINDIGKEITSKORREKTUR

PROCÉDÉ ET APPAREIL DE CORRECTION DE VITESSE DE VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.06.2022 KR 20220068419**

(43) Date of publication of application:
**06.12.2023 Bulletin 2023/49**

(73) Proprietor: **Hyundai Mobis Co., Ltd.
Gangnam-gu
Seoul 06141 (KR)**

(72) Inventors:
• **MOON, Sung Hoon
  16891 Yongin-si (KR)**
• **KWAK, Hyo Chul
  188416 Hwaseong-si (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
JP-A- 2000 081 480        JP-A- 2002 062 352
US-A1- 2015 369 912       US-A1- 2018 203 109

**Description**

**TECHNICAL FIELD**

The present invention relates to a method and apparatus for vehicle velocity correction.

**BACKGROUND**

The following description simply provides only the background information related to the embodiment without configuring the related art.

Recently, it is tendency that a forward collision avoidance system for safety of a driver and passengers is obligatorily mounted in vehicles under rules in global vehicle market including the U.S. The forward collision avoidance system includes sensors such as a radar, a camera, or lidar. The radar sensor of these sensors is strong against changes of the natural environment including a weather condition and an optical condition such as inclement weather, so the radar sensor is generally used for vehicles.

The information of a target collected by a radar is expressed as relative numerals for a vehicle such as a relative velocity, a relative distance, and a relative angle. The vehicle estimates absolute numeral information of the target collected by the radar on the basis of information collected using other sensors in the vehicle such as a wheel velocity sensor and a yaw rate sensor.

However, since the wheel velocity sensor uses a method of indirectly measuring the velocity of a vehicle, the wheel velocity sensor has an error of the sensor itself. Further, an error may be generated in wheel velocity information due to deformation and an air pressure change of a tire. Incorrect wheel velocity sensor causes a problem that the velocity of a target detected by a radar is incorrectly estimated. Accordingly, in order to accurately estimate the velocity of a target detected by a radar, there is a need for a logic that compensates for an ego-vehicle speed by itself.

A vehicle velocity correction method of the related art compensates for an ego-vehicle speed detected by a wheel velocity sensor by detecting all stationary targets using a radar and calculating relative velocity distribution of the stationary targets.

However, the vehicle velocity correction method of the related art does not propose a solution for the case when an error is generated in a physical mounting angle of a radar. When an error is generated in the mounting angle of a radar in the process of assembling a vehicle or an error is generated in the physical mounting angle of a radar due to a traffic accident, the relative velocity distribution of stationary targets is distorted, so there is a problem that the ego-vehicle speed correction value is incorrect.

Further, ego-vehicle speed correction may be not operated well in a road environment in which a stationary target does not exist, and contrary, in a road environment in which a stationary target exist, a problem of performance deterioration of a radar is generated due to an increase of a calculation amount. US 2015/369912 A1 discloses a radar device mounted in a moving object including a radar transmitter and a radar receiver. In the document the radar receiver is described to include a plurality of antenna brunch processors that perform correlation processing of the received returning signals and the radar transmission signal, and generate respective correlation signals each including arrival delay information of each of the received returning signals, an electric power profile generator that generates an electric power profiles for each arrival direction of the received returning signals and Doppler frequency component, using the generated correlation signals, and a stationary object group distribution generator that, based on the generated electric power profiles, obtains a first distribution of a Doppler frequency components of a stationary object group including a plurality of stationary objects as the plurality of targets in the perimeter of the moving object, for each azimuth angle. JP 2000 081480 A discloses a method for correcting vehicle speed detected by a vehicle speed sensor. In the document the method is described to include determining a width of amount of frequency shift using a vehicle speed VB, performing frequency shift, sequentially calculating evaluation values |Vp| for spectrum peaks, totalizing evaluation values |Vp| to calculate a neighborhood sum, calculating the total sums of the spectra, comparing the values of the total sums of the spectra and the amount of frequency shift corresponding to the smallest of the values to be used as the true amount of frequency shift, and calculating the actual vehicle speed using the true amount of frequency shift. US 2018/203109 A1 discloses a radar device. In the document it is described that a detection vehicle velocity acquiring unit is configured to acquire a detection vehicle velocity detected on the basis of rotation of a wheel, a relative velocity calculating unit is configured to calculate the relative velocity of a still object, a correction value calculating unit is configured to calculate a first correction value on the basis of the detection vehicle velocity and the relative velocity of the still object obtained in a CW mode and calculate a second correction value on the basis of the detection vehicle velocity and the relative velocity of the still object obtained in a FM-CW mode, and a vehicle velocity correcting unit is configured to correct the detection vehicle velocity using at least one of the first correction value and the second correction value. JP 2002 062352 A discloses that a spectrum waveform showing the relation between a frequency corresponding to a relative velocity and a signal intensity, is obtained from reflecting waves, when a still object peak is not present for a prescribed or longer time at the position of the frequency, corresponding to the relative velocity equivalent to one's vehicle velocity, it is decided that foreign matters stuck to the surface of a transmitting/receiving part of the radar.

## SUMMARY

The invention is defined by the appended claims.

## BRIEF DESCRIPTION OF THE DRAWINGS

FIG. 1 is an exemplary view showing that an apparatus for vehicle velocity correction detects a plurality of stationary targets positioned at several angles with respect to a vehicle.

FIG. 2 is an exemplary view showing the ratio of a stationary target relative velocity and a vehicle velocity that changes in accordance with a relative angle on a graph.

FIG. 3 is a block diagram for describing each component that the apparatus for vehicle velocity correction according to an embodiment of the present invention includes.

FIG. 4 is an exemplary view showing a mathematical relationship between an ego-vehicle speed and the relative velocity of a stationary target.

FIG. 5 is an exemplary view showing a difference of a velocity ratio according to a mounting angle of a first sensor according to an example not falling within the scope of the claimed invention and an error of a detected ego-vehicle speed detection on a graph.

FIG. 6 is an exemplary view showing statistical data when there is no error of a second sensor and a first sensor according to an embodiment of the present invention.

FIG. 7 is an exemplary view showing statistical data when there is no error of the second sensor and an error by the first sensor exists.

FIG. 8 is an exemplary view showing statistical data when an error by the second sensor exists and there is no error of the first sensor.

FIG. 9 is an exemplary view showing statistical data when errors by the second sensor and the first sensor exist.

FIG. 10 is an exemplary view showing controlling a transmission signal range of the first sensor.

FIG. 11 is a flowchart for describing each process included in a method of vehicle velocity correction that is performed by the apparatus for vehicle velocity correction according to an embodiment of the present invention.

FIG. 12 is a flowchart for describing each process included in a method of vehicle velocity correction that is performed by the apparatus for vehicle velocity correction according to an embodiment of the present invention and is based on accumulated differences of an ego-vehicle speed correction values.

FIG. 13 is a flowchart for describing each process included in a method of vehicle velocity correction that is performed by the apparatus for vehicle velocity correction according to an embodiment of the present invention and is based on control of a transmission signal range.

## DETAILED DESCRIPTION

An apparatus for vehicle velocity correction according to an embodiment can prevent distortion of ego-vehicle speed correction information when an error is generated in the physical mounting angle of a radar.

An apparatus for vehicle velocity correction according to another embodiment can correct an ego-vehicle speed even if ego-vehicle speed correction based on stationary target information is difficult in a road environment in which a stationary target does not exist.

An apparatus for vehicle velocity correction according to another embodiment can correct an ego-vehicle speed even without increasing the calculation amount of a radar in a road environment in which so many stationary targets exist.

Hereinafter, some embodiments will be described in detail with reference to the accompanying drawings. In the following description, like reference numerals preferably designate like elements, although the elements are shown in different drawings. Further, in the following description of some embodiments, a detailed description of related known components and functions when considered to obscure the subject of the present invention will be omitted for the purpose of clarity and for brevity.

In describing the components of the embodiments, alphanumeric codes may be used such as first, second, i), ii), a), b), etc., solely for the purpose of differentiating one component from others but not to imply or suggest the substances, the order, or sequence of the components. Throughout this specification, when parts "include" or "comprise" a component, they are meant to further include other components, not to exclude thereof unless there is a particular description contrary thereto.

The description of the present invention to follow in conjunction with the accompanying drawings is intended to describe exemplary embodiments of the present invention and is not intended to represent the only embodiments in which the technical idea of the present invention may be practiced.

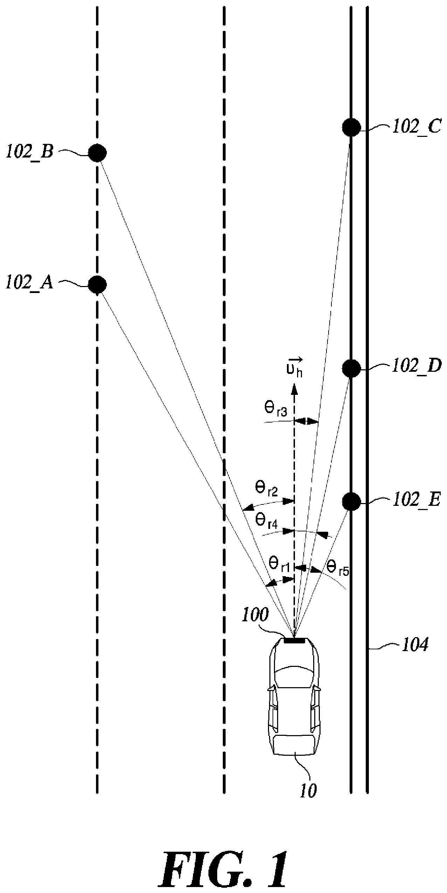

FIG. 1 is an exemplary view showing that an apparatus for vehicle velocity correction detects a plurality of stationary targets positioned at several angles with respect to a vehicle.

A vehicle velocity correction apparatus 100 included in a vehicle 10 senses a plurality of stationary targets 102 (102_A to 102_E) existing on a road using a first sensor (not shown). In this case, the first sensor may be a radar but the detailed kind of the first sensor is not limited thereto. The stationary target 102 may be a guard rail 104 or an object in a stop state positioned around the guard rail 104. In this case, a relative angle exists between a velocity vector of the vehicle 10 and a velocity vector of the stationary target with respect to the vehicle 10.

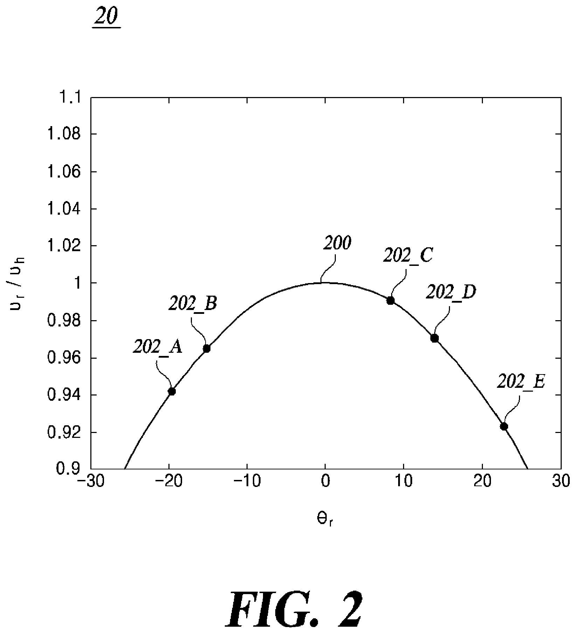

FIG. 2 is an exemplary view showing the ratio of a stationary target relative velocity and a vehicle velocity that changes in accordance with a relative angle on a graph.

Numerals of the relative velocity between the velocity vector of the vehicle 10 and a velocity vector of a stationary target are shown from -30 degrees to +30 degrees on the horizontal axis of a graph 20. A velocity ratio between the relative velocity of a stationary target and an ego-vehicle speed is shown from 0.9 to 1.1 with an interval of 0.02 on the vertical axis of the graph 20. The velocity ratio means the ratio between the relative velocity of a stationary target and an ego-vehicle speed in the present invention. A parabolic curve 200 is shown in the graph 20. The curve 200 shows the correlation between the relative velocity of a stationary target and the velocity ratio. When there is no error in a mounting angle of a first sensor, graph coordinates 202 (202_A to 202_E) corresponding to stationary targets, respectively, are positioned on the curve 200. The vehicle velocity correction apparatus 100 according to an embodiment of the present invention can correct an ego-vehicle speed regardless of whether an error is generated in the mounting angle of the first sensor using the characteristic that the ratio of the detected relative velocity of a stationary target and an ego-vehicle speed has predetermined correlation in accordance with a relative angle.

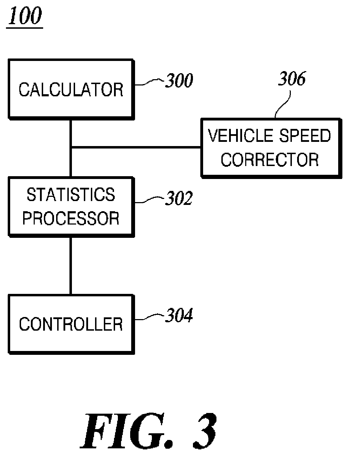

FIG. 3 is a block diagram for describing each component that the apparatus for vehicle velocity correction according to an embodiment of the present invention includes.

The vehicle velocity correction apparatus 100 according to an embodiment of the present invention includes all or some of a calculator 300, a statistics processor 302, a vehicle velocity corrector 304, and a controller 306. The vehicle velocity correction apparatus 100 shown in FIG. 3 is based on an embodiment of the present invention. All blocks shown in FIG. 3 are not necessary components, and in another embodiment, some blocks included in the vehicle velocity correction apparatus 100 may be added, changed, or removed. For example, the vehicle velocity correction apparatus 100 can perform ego-vehicle speed correction by operation of the calculator 300, the statistics processor 302, and the vehicle velocity corrector 304 except for the controller 306.

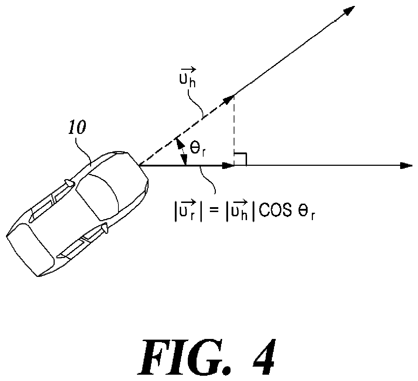

FIG. 4 is an exemplary view showing a mathematical relationship between an ego-vehicle speed and the relative velocity of a stationary target.

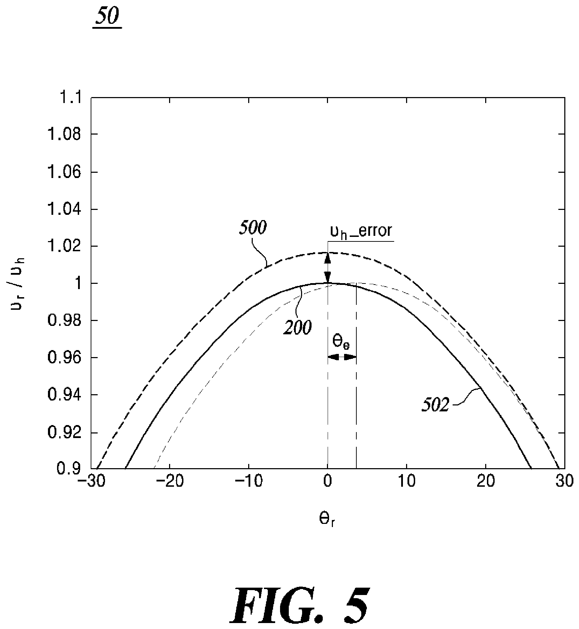

FIG. 5 is an exemplary view showing a difference of a velocity ratio according to a mounting angle of a first sensor according to an example not falling within the scope of the claimed invention and an error of a detected ego-vehicle speed detection on a graph.

Hereafter, each of components included in the vehicle velocity correction apparatus 100 is described with reference to FIGS. 3 to 5.

The calculator 300 calculates the relative velocity of a stationary target detected by the first sensor included in the vehicle 10, and the relative angle between the driving direction of the vehicle and the stationary target. In this case, the relative angle may be an angle made by a velocity vector of the vehicle and the velocity vector of the stationary target. The calculator 300 can calculate a velocity ratio between the relative velocity of a stationary target and an ego-vehicle speed using the relative velocity of the stationary target.

Referring to FIG. 4, the relative velocity $v_r$ of a stationary target detected from a signal reflected by the stationary target is projection of the driving direction velocity of the vehicle $v_h$ with respect to the relative angle $\theta$ of the stationary target. That is, when the first sensor is a front radar, the relationship of Equation 1 is formed between the relative velocity $v_r$ of a stationary target reflection signal and the ego-vehicle speed $v_n$ .
[Equation 1]

$$-v_r = |\overrightarrow{v_h}| \cos\theta \qquad (1a)$$

$$\therefore \frac{-v_r}{v_h} = \cos\theta \qquad (1b)$$

Meanwhile, when the first sensor is a rear radar, the relationship of Equation 2 is formed between the relative velocity $v_r$ of a stationary target reflection signal and the ego-vehicle speed $v_n$ .
[Equation 2]

$$+v_r = |\overrightarrow{v_h}| \cos\theta \qquad (2a)$$

$$\therefore \frac{+v_r}{v_h} = \cos\theta \qquad (2b)$$

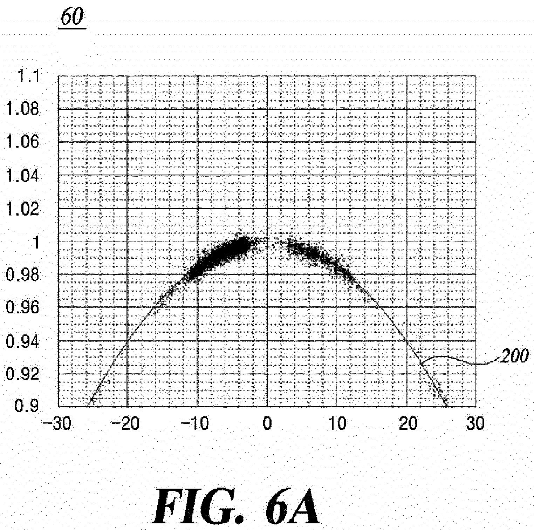

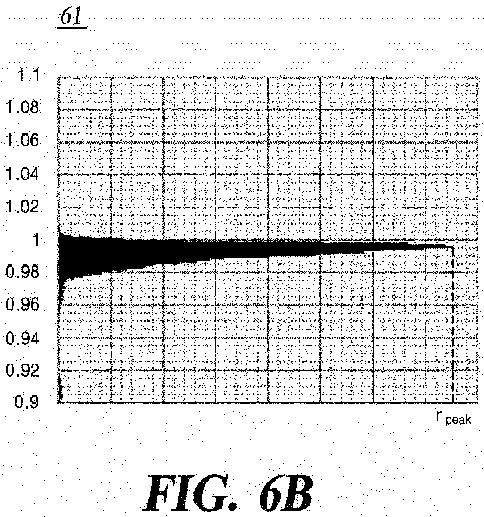

The statistics processor 302 creates statistical data about the velocity ratio for a plurality of stationary targets on the basis of the velocity ratio between the relative velocity of a stationary target and an ego-vehicle speed detected by a second sensor (not shown) included in the vehicle 10. The second sensor may be a wheel velocity sensor that estimates an ego-vehicle speed on the basis of a wheel velocity, but the detailed kind of the second sensor is not limited thereto. The statistics processor 302 collects statistics of the correlation between the relative velocity of a stationary target and an ego-vehicle speed using the characteristic that the possibility of a stationary target existing ahead of or behind the vehicle is low. In this case, the statistical data created by the statistics processor 302 is a histogram in which the velocity ratios for stationary targets are accumulated. Statistical data of a histogram type will be described below with reference to FIGS. 6 to 9.

Referring to FIG. 5, a characteristic in which a velocity ratio changes in accordance with a mounting angle error of the first sensor and an ego-vehicle speed detection error of the second sensor is shown. The mounting angle error and the ego-vehicle speed detection error are as in Equation 3a and Equation 3b, respectively. In this case, $\theta\_error$ means a mounting angle error and $v_{h\_error}$ means an ego-vehicle speed detection error.
[Equation 3]

$$\cos(\theta - \theta\_error) \quad (3a)$$

$$v_{h\_error} * \cos\theta \quad (3b)$$

The vehicle velocity corrector 304 corrects an ego-vehicle speed detected by the second sensor on the basis of a velocity ratio corresponding to the peak of statistical data. In detail, the vehicle velocity corrector calculates a corrected ego-vehicle speed by multiplying a reciprocal of a velocity ratio corresponding to a peak by an ego-vehicle speed detected by the second sensor. The peak of a statistical data expressed in a histogram type is characterized by being positioned close to 1 when an ego-vehicle speed is correct and by coming out of 1 when an ego-vehicle speed is incorrect by a second sensor error. The vehicle velocity corrector 304 corrects an ego-vehicle speed using the characteristic that a velocity ratio changes in accordance with an error of the second sensor.

Meanwhile, when ego-vehicle speed correction values are calculated over a predetermined number of times of correction, the calculator 300 can calculate the accumulated difference of the accumulated ego-vehicle speed correction values. A reference number of times of correction that is the premise of calculation of accumulated difference may be changed in various ways in accordance with embodiments of the present invention.

When the calculated accumulated difference is less than a preset reference difference, the vehicle velocity corrector 304 determines the average of the accumulated ego-vehicle speed correction values as a final ego-vehicle speed correction value. A reference difference that is the premise for determining the final ego-vehicle speed correction value may be changed in various ways in accordance with embodiments of the present invention. When a plurality of ego-vehicle speed correction values with a small difference is accumulated, the vehicle velocity correction apparatus 100 determines the average of the ego-vehicle speed correction values as the final ego-vehicle speed correction value. Accordingly, there is an effect that the accuracy of the ego-vehicle speed correction value determined by the vehicle velocity correction apparatus 100 is improved.

FIG. 6 is an exemplary view showing statistical data when there is no error of a second sensor and a first sensor according to an embodiment of the present invention.

Referring to a graph 60 of FIG. 6a, statistical data expressed on a correlation graph 200 between a velocity ratio and a relative angle are shown. Since there is no error by the first sensor and the second sensor, most of the coordinates corresponding to a plurality of stationary targets are positioned on the curve 200.

Referring to statistical data 61 expressed in a histogram type of FIG. 6b, the peak of the vehicle velocity ratio is formed around 1. Accordingly, the vehicle velocity corrector 304 determines an ego-vehicle speed correction value by multiplying an ego-vehicle speed detected by the second sensor by 1 that is the reciprocal of the peek.

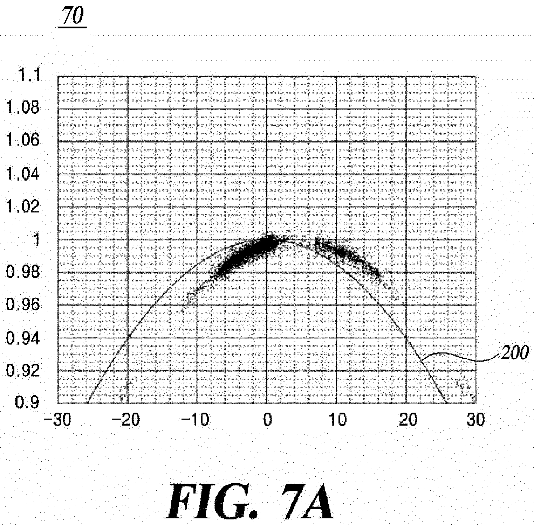

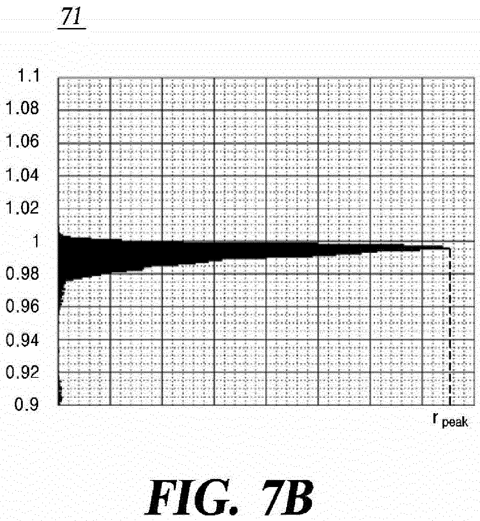

FIG. 7 is an exemplary view showing statistical data when there is no error of the second sensor and an error by the first sensor exists.

Referring to a graph 70 of FIG. 7a, statistical data in which a difference for a correlation graph 200 between a velocity ratio and a relative angle exists are shown. Since a mounting angle error of the first sensor exists, the statistical data are biased toward the horizontal axis.

However, referring to statistical data 71 expressed in a histogram type of FIG. 7b, the peak of the vehicle velocity ratio is formed around 1. Accordingly, the vehicle velocity corrector 304 determines an ego-vehicle speed correction value by multiplying an ego-vehicle speed detected by the second sensor by 1 that is the reciprocal of the peek. That is, there is an effect that the vehicle velocity correction apparatus 100 can determine an ego-vehicle speed correction value regardless of whether an error is generated in the mounting angle of the first sensor.

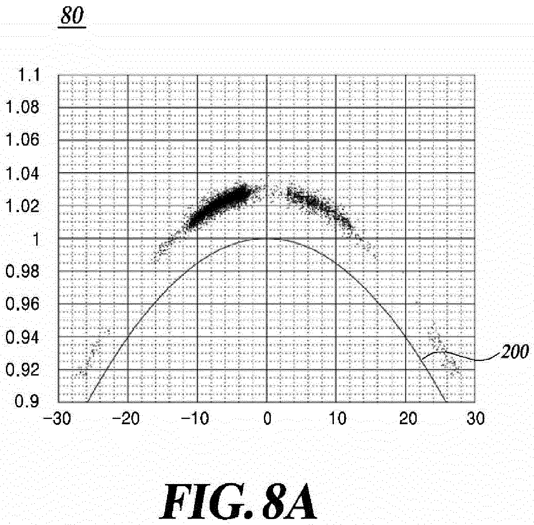

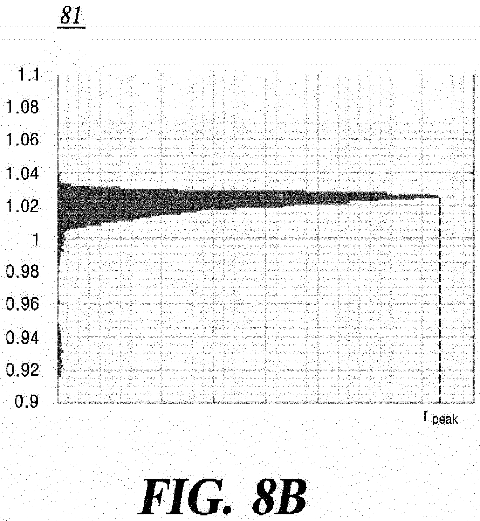

FIG. 8 is an exemplary view showing statistical data when an error by the second sensor exists and there is no error of the first sensor.

Referring to a graph 80 of FIG. 8a, statistical data in which a difference exists in the vertical axis direction with respect to a correlation graph 200 between a velocity ratio and a relative angle are shown. Since an ego-vehicle speed detection error of the second sensor exists, the statistical data are biased toward the vertical axis.

Referring to statistical data 81 expressed in a histogram type of FIG. 8b, the peak of the vehicle velocity ratio is formed around 1.02. Accordingly, the vehicle velocity corrector 304 determines an ego-vehicle speed correction value by multiplying an ego-vehicle speed detected by the second sensor by the reciprocal of the peak 1.02.

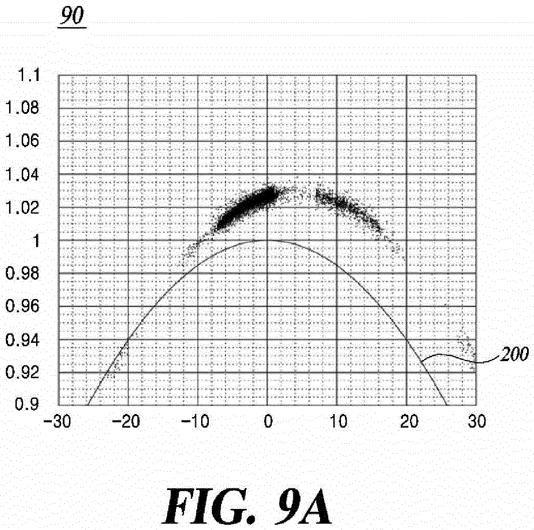

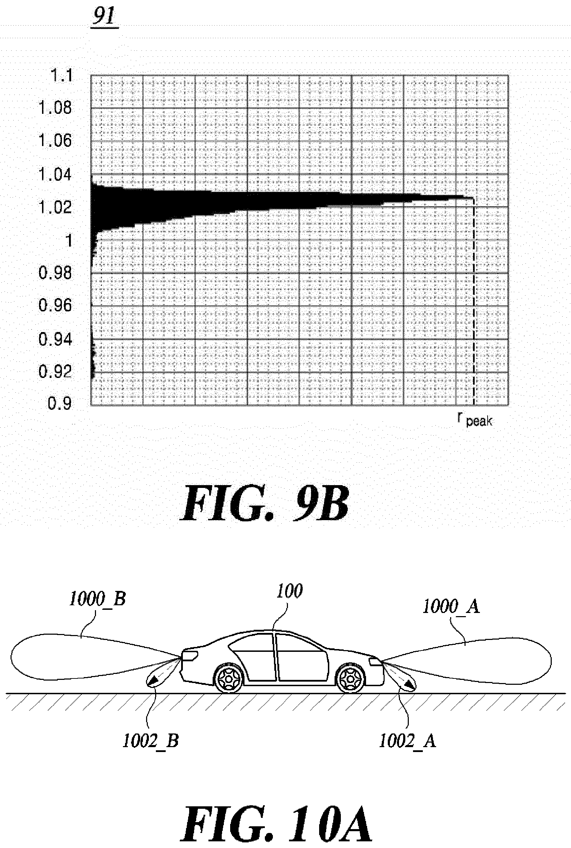

FIG. 9 is an exemplary view showing statistical data when errors by the second sensor and the first sensor exist.

Referring to a graph 90 of FIG. 9a, statistical data in which a difference exists in the horizontal axis direction and the vertical axis direction with respect to a correlation graph 200 between a velocity ratio and a relative angle are shown. Since an ego-vehicle speed detection error of the second sensor exists, the statistical data are biased toward the horizontal axis and the vertical axis.

Referring to statistical data 91 expressed in a histogram type of FIG. 9b, the peak of the vehicle velocity ratio is formed around 1.02. Accordingly, the vehicle velocity corrector 304 determines an ego-vehicle speed correction value by multiplying an ego-vehicle speed detected by the second sensor by the reciprocal of the peak 1.02. That is, comparing FIG. 8 and FIG. 9, there is an effect that the vehicle velocity correction apparatus 100 can correct an ego-vehicle speed regardless of whether an error is generated in the mounting angle of the first sensor.

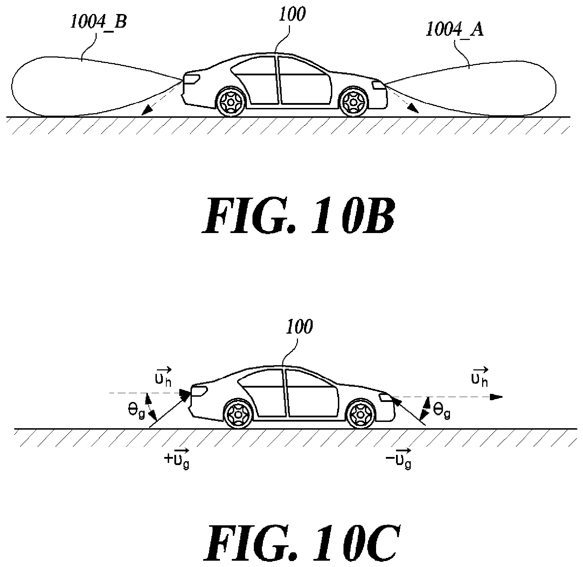

FIG. 10 is an exemplary view showing controlling a transmission signal range of the first sensor.

A vehicle velocity correction method based on stationary target information does not have a reference of ego-vehicle speed correction in a road environment in which a stationary target does not exist, so there is a problem that the method cannot perform ego-vehicle speed correction. Further, the vehicle velocity correction method based on stationary target information has a problem that the performance of the first sensor is deteriorated by an increase in a calculation amount in a road environment in which so many stationary targets exist.

The vehicle velocity correction apparatus 100 can correct an ego-vehicle speed by controlling a transmission signal range of the first sensor when the number of stationary targets is less than a first reference number of article or exceeds a second reference number of article. In this case, the first reference number of article and/or the second reference number of article may be changed in various ways in accordance with examples not falling within the scope of the claimed invention. When the number of stationary targets is less than the first reference number of article or exceeds the second reference number of article, it may be referred to as an exceptional circumstance.

The controller 306 transmits a control signal for controlling the range of the transmission signal that is transmitted from the first sensor to the first sensor. In this case, the control signal that is transmitted to the first sensor from the controller 306 may be a control signal that makes the first sensor generate an additional transmission signal of a side-lobe type toward the ground. In another embodiment, the control signal may be a control signal that makes the first sensor generate a transmission signal having an expanded range toward the ground.

Referring to FIG. 10a, a transmission signal transmitted by the first sensor in accordance with operation of the controller 306 is visually expressed. When stationary targets exist by the first reference number or article or more and less than the second reference number or article, the controller 306 can control the first sensor to transmit a general transmission signal 1000 (1000_A and 1000_B). The controller 306, in this exceptional circumstance, can control the first sensor to generate an additional transmission signal 1002 (1002_A and 1002_B) of a side-lobe type toward the ground.

Referring to FIG. 10B, a transmission signal transmitted and expanded by the first sensor in accordance with operation of the controller 306 is visually expressed. The controller 306, in this exceptional circumstance, can control the first sensor to generate an expanded transmission signal 1004 (1004_A and 1004_B) toward the ground. The controller 306 may select a control signal to transmit to the first sensor such that the first sensor transmits the transmission signal of FIG. 10a or FIG. 10b in consideration of the driving environment of the vehicle and the driving state of the vehicle.

The calculator 300 calculates the relative angle and the relative velocity of a reflection signal reflected by the ground in response to the transmission signal generated by the first sensor in accordance with a control signal.

The vehicle velocity corrector 304 corrects an ego-vehicle speed detected by the second sensor on the basis of the relative angle and the relative velocity. Referring to FIG. 10c, the relative velocity $v_g$ of the signal reflected by the ground is the same as the scalar product of the relative angle $\theta_g$ of the reflection signal and a vehicle driving direction velocity $v_h$. That is, when the first sensor is a front radar, the driving direction velocity of the vehicle calculated by the vehicle velocity corrector 304 using a ground reflection signal is as in Equation 4.

[Equation 4]

$$-v_r = |\vec{v_h}| \cos\theta_g \qquad (4a)$$

$$v_h = \frac{-v_r}{\cos\theta_g} \qquad (4b)$$

Meanwhile, when the first sensor is a front radar, the driving direction velocity of the vehicle calculated by the vehicle velocity corrector 304 using a ground reflection signal is as in Equation 5. The vehicle velocity corrector 304 can calculate an ego-vehicle speed on the basis of the relationship of Equation 4 or Equation 5 even if the first sensor is a front-side radar or a rear-side radar. Accordingly, there is an effect that the vehicle velocity correction apparatus 100 makes it possible to correct and ego-vehicle speed even in an exceptional circumstance in which the number of stationary targets rapidly changes.

[Equation 5]

$$v_r = |\vec{v_h}| \cos\theta_g \qquad (5a)$$

$$v_h = \frac{+v_r}{\cos\theta_g} \qquad (5b)$$

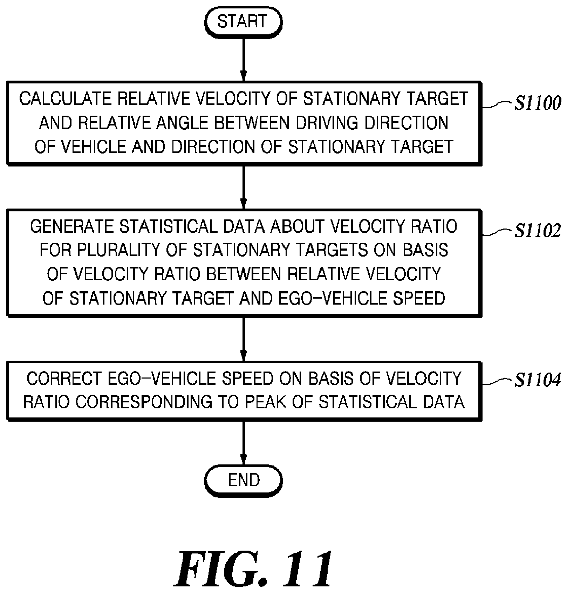

FIG. 11 is a flowchart for describing each process included in a method of vehicle velocity correction that is performed by the apparatus for vehicle velocity correction according to an embodiment of the present invention.

The vehicle velocity correction apparatus 100 calculates the relative velocity of a stationary target detected by the first sensor included in a vehicle, and the relative angle between the driving direction of the vehicle and the direction in which the stationary target is positioned (S1100).

The vehicle velocity correction apparatus 100 creates statistical data about the velocity ratio for a plurality of stationary targets on the basis of the velocity ratio between the relative velocity of a stationary target and an ego-vehicle speed detected by a second sensor included in the vehicle (S1102). In this case, the statistical data is a histogram in which the velocity ratios of stationary targets are accumulated.

The vehicle velocity corrector 100 corrects an ego-vehicle speed detected by the second sensor on the basis of a velocity ratio corresponding to the peak of statistical data (S1104). The vehicle velocity corrector 100 calculates a corrected ego-vehicle speed by multiplying the reciprocal of a velocity ratio corresponding to the peak of the statistical data by an ego-vehicle speed detected by the second sensor.

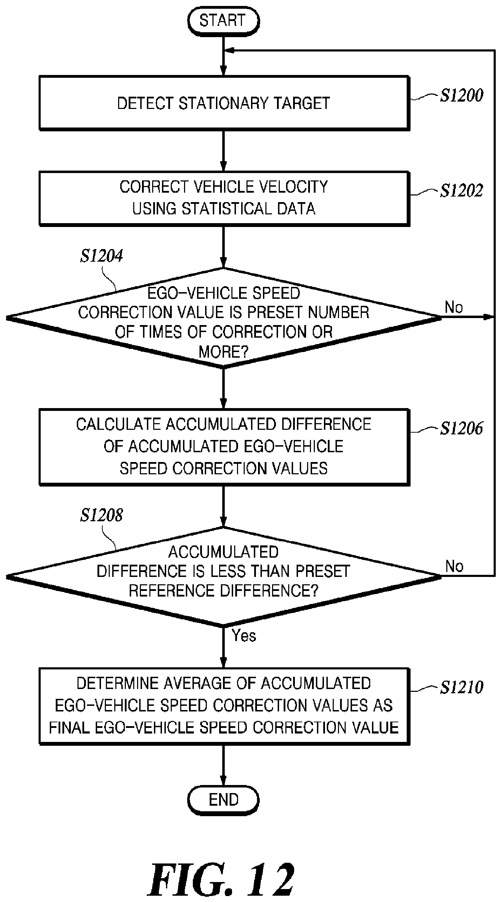

FIG. 12 is a flowchart for describing each process included in a method of vehicle velocity correction that is performed by the apparatus for vehicle velocity correction according to an embodiment of the present invention and is based on accumulated differences of an ego-vehicle speed correction values.

The vehicle velocity correction apparatus 100 detects a stationary target using the first sensor (S1200).

The vehicle velocity correction apparatus 100 corrects an ego-vehicle speed using statistical data calculated on the basis of a plurality of stationary targets (S1202). In this case, the process S1202 may include the processes S1100 to S1104 of FIG. 11.

When ego-vehicle speed correction value are calculated over a predetermined number of times of correction, the vehicle velocity correction apparatus 100 calculates the accumulated difference of the accumulated ego-vehicle speed correction values (S1204, S1206).

When the calculated accumulated difference is less than a preset reference difference, the vehicle velocity corrector 100 determines the average of the accumulated ego-vehicle speed correction values as a final ego-vehicle speed correction value (S1208, S1210).

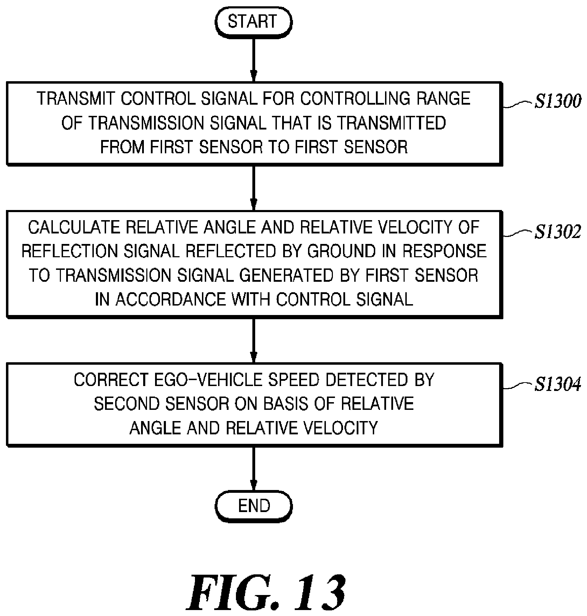

FIG. 13 is a flowchart for describing each process included in a method of vehicle velocity correction that is performed by the apparatus for vehicle velocity correction according to an embodiment of the present invention and is based on control of a transmission signal range.

The vehicle velocity correction apparatus 100 transmits a control signal for controlling the range of the transmission signal that is transmitted from the first sensor to the first sensor (S1300). In this case, the control signal may be a control signal making the first sensor generate an additional transmission signal in a side-lobe type toward the ground or a control signal making the first sensor generate a transmission signal having an expanded range toward the ground.

The vehicle velocity correction apparatus 100 calculates the relative angle and the relative velocity of a reflection signal reflected by the ground in response to the transmission signal generated by the first sensor in accordance with a control signal (S1302).

The vehicle velocity corrector 100 corrects an ego-vehicle speed detected by the second sensor on the basis of the relative angle and the relative velocity of a reflection signal from the vehicle 10 (S1304).

Various embodiments such as a device and a method described herein may be implemented by a digital electronic circuit, an integrated circuit, a field programmable gate array (FPGA), an application specific integrated circuit (ASIC), computer hardware, firmware, software, and/or a combination thereof. These various embodiments may include the case in which they are implemented as one or more computer programs that can be executed in a computer-programmable system. The programmable system includes at least one programmable processor (which may be a processor for a specific purpose or a common processor) that is connected to receive data and instructions from a storage system, at least one input device, and at least one output device and transmit data and instructions to them. Computer programs (which have known as programs, software, software applications, or codes) include instructions for a programmable processor and are stored in a "computer-readable recording medium".

A computer-readable recording medium includes all kinds of recording devices that keep data that can be read by a computer system. The computer-readable recording medium may further include a non-volatile or non-transitory medium such as a ROM, a CD-ROM, a magnetic tape, a floppy disk, a memory card, a hard disk, a magneto-optical disc, and a storage device, or a transitory medium such as a data transmission medium. Further, the computer-readable recording mediums may be distributed to computer systems that are connected through a network and may keep and execute codes that can be divisionally read by computers.

Various embodiments of apparatuses and methods described herein may be implemented by a programmable computer. The computer is a computer-programmable processor, a data storage system (including a volatile memory, a nonvolatile memory, or other types of storage systems, or a combination thereof), and at least one communication interface. For example, the programmable computer may be one of a server, a network device, a set-top box, a built-in device, a computer expansion module, a personal computer, a laptop, a Personal Data Assistant (PDA), a cloud computing system, or a mobile device.

According to an embodiment, there is an effect that ego-vehicle speed correction that is independent from and strong against an external environment such as an error of the physical mounting angle of a radar is performed.

According to another embodiment, there is an effect that an ego-vehicle speed is corrected in real time without a delay even in an environment in which a stationary target is not detected, and an ego-vehicle speed is corrected by a constant calculation time regardless of the number of stationary targets.

**Claims**

1. A method for vehicle velocity correction that is performed by an apparatus for vehicle velocity correction, the method comprising:

   a process of calculating (S1100) relative velocities of a plurality of stationary targets detected by a first sensor included in a vehicle, and relative angles between a driving direction of the vehicle and directions in which the stationary targets are positioned;
   **characterized by** a process of creating (S1102) statistical data about velocity ratios for the plurality of stationary targets, wherein a velocity ratio is a ratio between a relative velocity of one of the stationary targets and an ego-vehicle speed detected by a second sensor included in the vehicle, wherein the statistical data is a histogram in which the velocity ratios are accumulated in the process of creating (S1102); and
   a process of correcting (S1104) the ego-vehicle speed detected by the second sensor based on a velocity ratio corresponding to a peak on the statistical data,
   wherein the process of correcting (S1104) includes a process of calculating the corrected ego-vehicle speed by multiplying a reciprocal of the velocity ratio corresponding to the peak by the ego-vehicle speed detected by the second sensor.

2. The method of claim 1, further comprising:

   a process of calculating (S1206) an accumulated difference of accumulated ego-vehicle speed correction values when ego-vehicle speed correction values are accumulated by a preset number of times of correction or more; and
   a process of determining (S1210) an average of the accumulated ego-vehicle speed correction values as a final accumulated ego-vehicle speed correction value when the calculated accumulated difference is less than a preset reference difference.

3. The method of claim 1 or 2, further comprising

   a process of transmitting (S1300) a control signal for controlling a range of a transmission signal, which is transmitted from the first sensor, to the first sensor;
   a process of calculating (S1302) a relative angle and a relative velocity of a reflection signal reflected by a ground in response to the transmission signal generated by the first sensor in accordance with the control signal; and
   a process of correcting (S1304) the ego-vehicle speed detected by the second sensor based on the relative angle and the relative velocity.

4. The method of claim 3, wherein in the process of transmitting (S1300) a control signal to the first sensor, the control signal is a control signal making the first sensor generate an additional transmission signal in a side-lobe type toward the ground or a control signal making the first sensor generate a transmission signal having an expanded range toward the ground.

5. An apparatus (100) for vehicle velocity correction, the apparatus (100) comprising:

   a calculator (300) calculating relative velocities of a plurality of stationary targets detected by a first sensor included in a vehicle, and relative angles between a driving direction of the vehicle and directions in which the stationary targets are positioned;
   **characterized by** a statistics processor (302) creating statistical data about velocity ratios for the plurality of stationary targets, wherein a velocity ratio is a ratio between a relative velocity of one of the stationary targets and an ego-vehicle speed detected by a second sensor included in the vehicle, wherein the statistical data created by the statistics processor (302) is a histogram in which the velocity ratios are accumulated; and
   a vehicle speed corrector (306) correcting the ego-vehicle speed detected by the second sensor based on a velocity ratio corresponding to a peak on the statistical data,
   wherein the vehicle speed corrector (306) calculates the corrected ego-vehicle speed by multiplying a reciprocal of the velocity ratio corresponding to the peak by the ego-vehicle speed detected by the second sensor.

6. The apparatus (100) of claim 5, wherein the calculator (300) calculates an accumulated difference of accumulated ego-vehicle speed correction values when ego-vehicle speed correction values are accumulated by a preset number of times of correction or more, and

the vehicle speed corrector (306) determines an average of the accumulated ego-vehicle speed correction values as a final accumulated ego-vehicle speed correction value when the calculated accumulated difference is less than a preset reference difference.

7. The apparatus (100) of claim 5 or 6, further comprising

   a controller transmitting a control signal for controlling a range of a transmission signal, which is transmitted from the first sensor, to the first sensor,

   wherein the calculator (300) calculates a relative angle and a relative velocity of a reflection signal reflected by a ground in response to the transmission signal generated by the first sensor in accordance with the control signal, and

   the vehicle speed corrector (306) corrects the ego-vehicle speed detected by the second sensor based on the relative angle and the relative velocity.

8. The apparatus (100) of claim 7, wherein the control signal that is transmitted by the controller is a control signal making the first sensor generate an additional transmission signal in a side-lobe type toward the ground or a control signal making the first sensor generate a transmission signal having an expanded range toward the ground.

9. A vehicle comprising the apparatus (100) according to any one of claims 5 to 8.


**Patentansprüche**

1. Verfahren zur Fahrzeuggeschwindigkeitskorrektur, das von einer Vorrichtung zur Fahrzeuggeschwindigkeitskorrektur durchgeführt wird, wobei das Verfahren umfasst:

   einen Vorgang zum Berechnen (S1100) relativer Geschwindigkeiten einer Mehrzahl stationärer Ziele, die von einem in einem Fahrzeug enthaltenen ersten Sensor erfasst werden, und relativer Winkel zwischen einer Fahrtrichtung des Fahrzeugs und Richtungen, in denen die stationären Ziele positioniert sind;
   **gekennzeichnet durch**
   einen Vorgang zum Erstellen (S1102) statistischer Daten über Geschwindigkeitsverhältnisse für die Mehrzahl stationärer Ziele, wobei ein Geschwindigkeitsverhältnis ein Verhältnis zwischen einer relativen Geschwindigkeit eines der stationären Ziele und einer von einem im Fahrzeug enthaltenen zweiten Sensor erfassten Geschwindigkeit des eigenen Fahrzeugs ist, wobei die statistischen Daten ein Histogramm sind, in dem die Geschwindigkeitsverhältnisse beim Vorgang zum Erstellen (S1102) akkumuliert werden; und

einen Vorgang zum Korrigieren (S1104) der vom zweiten Sensor erfassten Geschwindigkeit des eigenen Fahrzeugs basierend auf einem Geschwindigkeitsverhältnis, das einem Spitzenwert in den statistischen Daten entspricht, wobei der Vorgang zum Korrigieren (S1104) einen Vorgang zum Berechnen der korrigierten Geschwindigkeit des eigenen Fahrzeugs durch Multiplikation eines Kehrwerts des dem Spitzenwert entsprechenden Geschwindigkeitsverhältnisses mit der vom zweiten Sensor erfassten Geschwindigkeit des eigenen Fahrzeugs umfasst.

2. Verfahren nach Anspruch 1, weiterhin umfassend:

   einen Vorgang zum Berechnen (S1206) einer akkumulierten Differenz akkumulierter Korrekturwerte für die Geschwindigkeit des eigenen Fahrzeugs, wenn die Korrekturwerte für die Geschwindigkeit des eigenen Fahrzeugs um eine voreingestellte Anzahl von Korrekturen oder mehr akkumuliert werden; und
   einen Vorgang zum Bestimmen (S1210) eines Durchschnitts der akkumulierten Korrekturwerte der Geschwindigkeit des eigenen Fahrzeugs als ein endgültiger akkumulierter Korrekturwert der Geschwindigkeit des eigenen Fahrzeugs, wenn die berechnete akkumulierte Differenz kleiner als eine voreingestellte Referenzdifferenz ist.

3. Verfahren nach Anspruch 1 oder 2, weiterhin umfassend

   einen Vorgang zum Senden (S1300) eines Steuersignals zum Steuern einer Reichweite eines Übertragungssignals, das vom ersten Sensor gesendet wird, an den ersten Sensor;
   einen Vorgang zum Berechnen (S1302) eines relativen Winkels und einer relativen Geschwindigkeit eines von einem Boden reflektierten Reflexionssignals als Reaktion auf das vom ersten Sensor erzeugte Übertragungssignal gemäß dem Steuersignal; und
   einen Vorgang zum Korrigieren (S1304) der vom zweiten Sensor erfassten Geschwindigkeit des eigenen Fahrzeugs basierend auf dem relativen Winkel und der relativen Geschwindigkeit.

4. Verfahren nach Anspruch 3, wobei im Vorgang zum Senden (S1300) eines Steuersignals an den ersten Sensor das Steuersignal ein Steuersignal, das den ersten Sensor veranlasst, ein zusätzliches Übertragungssignal vom Nebenkeulentyp in Richtung des Bodens zu erzeugen, oder ein Steuersignal ist, das den ersten Sensor veranlasst, ein Übertragungssignal mit einer erweiterten Reichweite in Richtung des Bodens zu erzeugen.

5. Vorrichtung (100) zur Fahrzeuggeschwindigkeitskorrektur, wobei die Vorrichtung (100) umfasst:

einen Rechner (300), der relative Geschwindigkeiten einer Mehrzahl stationärer Ziele, die von einem in einem Fahrzeug enthaltenen ersten Sensor erfasst werden, und relative Winkel zwischen einer Fahrtrichtung des Fahrzeugs und Richtungen berechnet, in denen die stationären Ziele positioniert sind;
**gekennzeichnet durch**
einen Statistikprozessor (302), der statistische Daten über Geschwindigkeitsverhältnisse für die Mehrzahl stationärer Ziele erzeugt, wobei ein Geschwindigkeitsverhältnis ein Verhältnis zwischen einer relativen Geschwindigkeit eines der stationären Ziele und einer von einem im Fahrzeug enthaltenen zweiten Sensor erfassten Geschwindigkeit des eigenen Fahrzeugs ist, wobei die vom Statistikprozessor (302) erstellten statistischen Daten ein Histogramm sind, in dem die Geschwindigkeitsverhältnisse akkumuliert sind; und
eine Fahrzeuggeschwindigkeitskorrektureinrichtung (306), die die vom zweiten Sensor erfasste Geschwindigkeit des eigenen Fahrzeugs basierend auf einem Geschwindigkeitsverhältnis korrigiert, das einem Spitzenwert in den statistischen Daten entspricht, wobei die Fahrzeuggeschwindigkeitskorrektureinrichtung (306) die korrigierte Geschwindigkeit des eigenen Fahrzeugs durch Multiplikation eines Kehrwerts des dem Spitzenwert entsprechenden Geschwindigkeitsverhältnisses mit der vom zweiten Sensor erfassten Geschwindigkeit des eigenen Fahrzeugs berechnet.

6. Vorrichtung (100) nach Anspruch 5, wobei der Rechner (300) eine akkumulierte Differenz akkumulierter Korrekturwerte der Geschwindigkeit des eigenen Fahrzeugs berechnet, wenn die Korrekturwerte der Geschwindigkeit des eigenen Fahrzeugs um eine voreingestellte Anzahl von Korrekturen oder mehr akkumuliert werden, und
die Fahrzeuggeschwindigkeitskorrektureinrichtung (306) einen Durchschnitt der akkumulierten Korrekturwerte der Geschwindigkeit des eigenen Fahrzeugs als einen endgültigen akkumulierten Korrekturwert der Geschwindigkeit des eigenen Fahrzeugs bestimmt, wenn die berechnete akkumulierte Differenz kleiner als eine voreingestellte Referenzdifferenz ist.

7. Vorrichtung (100) nach Anspruch 5 oder 6, weiterhin umfassend

eine Steuerung, die ein Steuersignal zum Steuern einer Reichweite eines Übertragungssignals, das vom ersten Sensor gesendet wird, an den ersten Sensor sendet,
wobei der Rechner (300) einen relativen Winkel und eine relative Geschwindigkeit eines von einem Boden reflektierten Reflexionssignals als Reaktion auf das vom ersten Sensor erzeugte Übertragungssignal gemäß dem Steuersignal berechnet, und
die Fahrzeuggeschwindigkeitskorrektureinrichtung (306) die vom zweiten Sensor erfasste Geschwindigkeit des eigenen Fahrzeugs basierend auf dem relativen Winkel und der relativen Geschwindigkeit korrigiert.

8. Vorrichtung (100) nach Anspruch 7, wobei das Steuersignal, das von der Steuerung gesendet wird, ein Steuersignal, das den ersten Sensor veranlasst, ein zusätzliches Übertragungssignal vom Nebenkeulentyp in Richtung des Bodens zu erzeugen, oder ein Steuersignal ist, das den ersten Sensor veranlasst, ein Übertragungssignal mit einer erweiterten Reichweite in Richtung des Bodens zu erzeugen.

9. Fahrzeug, das die Vorrichtung (100) nach einem der Ansprüche 5 bis 8 umfasst.

**Revendications**

1. Procédé de correction de vitesse de véhicule exécuté par un appareil de correction de vitesse de véhicule, le procédé comprenant:

un processus de calcul (S1100) de vitesses relatives d'une pluralité de cibles fixes détectées par un premier capteur situé dans un véhicule, et des angles relatifs entre une direction de conduite du véhicule et les directions dans lesquelles les cibles fixes sont positionnées;
**caractérisé par** un
processus de création (S1102) de données statistiques sur les rapports de vitesse pour la pluralité de cibles fixes, dans lequel un rapport de vitesse est un rapport entre une vitesse relative de l'une des cibles fixes et une vitesse du véhicule ego détectée par un second capteur situé dans le véhicule, dans lequel les données statistiques sont un histogramme dans lequel les rapports de vitesse sont accumulés dans le processus de création (S1102); et

un processus de correction (S1104) de la vitesse du véhicule ego détectée par le second capteur sur la base d'un rapport de vitesse correspondant à un pic sur les données statistiques,

dans lequel le processus de correction (S1104) comprend un processus de calcul de la vitesse corrigée du véhicule ego par multiplication d'un nombre réciproque du rapport de vitesse correspondant au pic par la vitesse du véhicule ego détectée par le second capteur.

2. Procédé selon la revendication 1, comprenant en outre:

un processus de calcul (S1206) d'une différence accumulée des valeurs de correction de la vitesse du véhicule ego lorsque les valeurs de correction de vitesse du véhicule ego sont accumulées par un nombre prédéfini de fois de correction ou plus; et
un processus de détermination (S1210) d'une moyenne des valeurs de correction de vitesse du véhicule égo accumulées en tant que valeur finale de correction de vitesse du véhicule ego accumulée lorsque la différence accumulée calculée est inférieure à une différence de référence prédéfinie.

3. Procédé selon la revendication 1 ou 2, comprenant en outre

un processus de transmission (S1300) d'un signal de commande pour commander la portée d'un signal de transmission, qui est transmis par le premier capteur, au premier capteur;
un processus de calcul (S1302) d'un angle relatif et d'une vitesse relative d'un signal de réflexion réfléchi par un sol en réponse au signal de transmission généré par le premier capteur en fonction du signal de commande; et
un processus de correction (S1304) de vitesse du véhicule ego détectée par le second capteur sur la base de l'angle relatif et de la vitesse relative.

4. Procédé selon la revendication 3, dans lequel au cours du processus de transmission (S1300) d'un signal de commande au premier capteur, le signal de commande est un signal de commande permettant au premier capteur de générer un signal de transmission supplémentaire de type lobes latéraux vers le sol ou un signal de commande permettant au premier capteur de générer un signal de transmission ayant une portée étendue vers le sol.

5. Appareil (100) permettant de corriger la vitesse de véhicule, l'appareil (100) comprenant:

un calculateur (300) calculant des vitesses relatives d'une pluralité de cibles fixes détectées par un premier capteur situé dans un véhicule, et des angles relatifs entre une direction de conduite du véhicule et les directions dans lesquelles les cibles fixes sont positionnées;
**caractérisé par**
un processeur de statistiques (302) créant des données statistiques sur les rapports de vitesse pour la pluralité de cibles fixes, dans lequel un rapport de vitesse est un rapport entre une vitesse relative de l'une des cibles fixes et une vitesse du véhicule ego détecté par un second capteur situé dans le véhicule, dans lequel les données statistiques créées par le processeur de statistiques (302) est un histogramme dans lequel les rapports de vitesse sont accumulés; et
un correcteur de vitesse de véhicule (306) corrigeant la vitesse du véhicule ego détectée par le second capteur sur la base d'un rapport de vitesse correspondant à un pic sur les données statistiques,
dans lequel le correcteur de vitesse de véhicule (306) calcule la vitesse corrigée du véhicule ego par multiplication d'un nombre réciproque du rapport de vitesse correspondant au pic par la vitesse du véhicule ego détectée par le second capteur.

6. Appareil (100) selon la revendication 5, dans lequel le calculateur (300) calcul une différence accumulée des valeurs de correction de la vitesse du véhicule ego lorsque les valeurs de correction de vitesse du véhicule ego sont accumulées par un nombre prédéfini de fois de correction ou plus; et
le correcteur de vitesse de véhicule (306) détermine une moyenne des valeurs de correction de vitesse du véhicule égo accumulées en tant que valeur finale de correction de vitesse du véhicule ego accumulée lorsque la différence accumulée calculée est inférieure à une différence de référence prédéfinie.

7. Appareil (100) selon la revendication 5 ou 6, comprenant en outre

un dispositif de commande transmettant un signal de commande pour commander la portée d'un signal de transmission, qui est transmis par le premier capteur, au premier capteur,
dans lequel le calculateur (300) calcule un angle relatif et d'une vitesse relative d'un signal de réflexion réfléchi par un sol en réponse au signal de transmission généré par le premier capteur en fonction du signal de commande; et le correcteur de vitesse de véhicule (306) corrige la vitesse du véhicule ego détectée par le second capteur sur la base de l'angle relatif et de la vitesse relative.

8. Appareil (100) selon la revendication 7, dans le signal de commande qui est transmis par le dispositif de commande est un signal de commande permettant au premier capteur de générer un signal de transmission supplémentaire de type lobes latéraux vers le sol ou un signal de commande permettant au premier capteur de générer un signal de transmission ayant une portée étendue vers le sol.

9. Véhicule comprenant l'appareil (100) selon l'une quelconque des revendications 5 à 8.

**FIG. 1**

20

FIG. 2

_100_

| CALCULATOR | ~300 |

VEHICLE SPEED CORRECTOR  306

| STATISTICS PROCESSOR | ~302 |

| CONTROLLER | ~304 |

# FIG. 3

$\vec{u_h}$

$\theta_r$

10

$|\vec{u_r}| = |\vec{u_h}| \cos \theta_r$

## FIG. 4

<u>50</u>

**FIG. 5**

**FIG. 6A**

FIG. 6B

**FIG. 7A**

*FIG. 7B*

FIG. 8A

FIG. 8B

**FIG. 9A**

**FIG. 9B**

**FIG. 10A**

**_FIG. 10B_**

**_FIG. 10C_**

START

CALCULATE RELATIVE VELOCITY OF STATIONARY TARGET
AND RELATIVE ANGLE BETWEEN DRIVING DIRECTION
OF VEHICLE AND DIRECTION OF STATIONARY TARGET ⟋S1100

GENERATE STATISTICAL DATA ABOUT VELOCITY RATIO
FOR PLURALITY OF STATIONARY TARGETS ON BASIS
OF VELOCITY RATIO BETWEEN RELATIVE VELOCITY
OF STATIONARY TARGET AND EGO-VEHICLE SPEED ⟋S1102

CORRECT EGO-VEHICLE SPEED ON BASIS OF VELOCITY
RATIO CORRESPONDING TO PEAK OF STATISTICAL DATA ⟋S1104

END

# FIG. 11

START

DETECT STATIONARY TARGET — S1200

CORRECT VEHICLE VELOCITY
USING STATISTICAL DATA — S1202

S1204

EGO-VEHICLE SPEED
CORRECTION VALUE IS PRESET NUMBER
OF TIMES OF CORRECTION OR
MORE?

No →

CALCULATE ACCUMULATED DIFFERENCE
OF ACCUMULATED EGO-VEHICLE
SPEED CORRECTION VALUES — S1206

S1208

ACCUMULATED
DIFFERENCE IS LESS THAN PRESET
REFERENCE DIFFERENCE?

No →

Yes

DETERMINE AVERAGE OF ACCUMULATED
EGO-VEHICLE SPEED CORRECTION VALUES AS
FINAL EGO-VEHICLE SPEED CORRECTION VALUE — S1210

END

*FIG. 12*

START

TRANSMIT CONTROL SIGNAL FOR CONTROLLING RANGE OF TRANSMISSION SIGNAL THAT IS TRANSMITTED FROM FIRST SENSOR TO FIRST SENSOR ~S1300

CALCULATE RELATIVE ANGLE AND RELATIVE VELOCITY OF REFLECTION SIGNAL REFLECTED BY GROUND IN RESPONSE TO TRANSMISSION SIGNAL GENERATED BY FIRST SENSOR IN ACCORDANCE WITH CONTROL SIGNAL ~S1302

CORRECT EGO-VEHICLE SPEED DETECTED BY SECOND SENSOR ON BASIS OF RELATIVE ANGLE AND RELATIVE VELOCITY ~S1304

END

# FIG. 13

**EP 4 286 891 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015369912 A1
- JP 2000081480 A
- US 2018203109 A1
- JP 2002062352 A